# EUROPÄISCHE PATENTSCHRIFT

(11) **EP 2 783 548 B1**
(45) Veröffentlichungstag und Bekanntmachung des Hinweises auf die Patenterteilung: **07.06.2017**
(21) Anmeldenummer: 12798195.9
(22) Anmeldetag: 15.11.2012
(51) Int. Cl.: H05B 7/109, H05B 7/14

(54) **ELEKTROLICHTBOGENOFEN UND VERFAHREN ZU SEINEM BETRIEB**
ELECTRIC ARC FURNACE AND METHOD FOR OPERATING SAME
FOUR À ARC ÉLECTRIQUE ET SON PROCÉDÉ DE FONCTIONNEMENT

(30) Priorität: 24.11.2011 DE 102011087065
(43) Veröffentlichungstag der Anmeldung: 01.10.2014
(73) Patentinhaber: SMS group GmbH, 40237 Düsseldorf (DE)
(72) Erfinder: KLEINSCHMIDT, Guido, 47447 Moers (DE); BADER, Jan, 46519 Alpen (DE); SCHMALE, Klaus, 47839 Krefeld (DE); BEST, Rolf, 45966 Gladbeck (DE); BERGS, Alexander, 48429 Rheine (DE); HENKEL, Thomas, 47057 Duisburg (DE); STRIEDER, Detlef, 47239 Duisburg (DE); STARKE, Peter, 47228 Duisburg (DE); ERTL, Markus, 40822 Mettmann (DE); KUNZE, Jürgen, 46509 Xanten (DE)
(74) Vertreter: Klüppel, Walter
(86) Internationale Anmeldenummer: PCT/EP2012/072707
(87) Internationale Veröffentlichungsnummer: WO 2013/075999

(56) Entgegenhaltungen:
- EP-A2- 0 559 390
- EP-B1- 0 190 313
- CA-A1- 1 146 204
- DE-A1- 3 016 350
- JP-A- 5 234 674
- US-A- 3 898 364
- US-A- 3 937 867

## Beschreibung

Die Erfindung betrifft einen Elektrolichtbogenofen, Electric Arc furnace, sowie ein Verfahren zu seinem Betrieb. Der Elektrolichtbogenofen besteht im Wesentlichen aus einem Untergefäß mit einer Absticheinrichtung zum Abstechen von Schmelze und einem auf das Untergefäß aufsetzbaren Deckel. Durch den Deckel ragt mindestens eine Elektrode in das Innere des Lichtbogenofens hinein. Die Elektrode wird gehalten von einer Elektrodenhalteeinrichtung. Es ist eine Spannungsversorgungseinrichtung vorzusehen zum Bereitstellen einer elektrischen Versorgungsspannung für die Elektrode für einen Dauerbetrieb über mehrere Schmelzen hinweg.

Allgemein zum Thema Elektrolichtbogenofen findet sich sehr umfangreicher Stand der Technik, zum Beispiel in den Druckschriften US 4,423,514; US 4,238,632; EP 0 269 465 B1; EP 1 181 492 B1; EP 8 430 020 B1; US 4,805,186; EP 617739 B1; EP 1 029 089 B1; EP 0 889 138 B1; DE 41 23 039 A1; DE 35 43 773 A1; DE 103 92 661 T5 und in dem Buch "Stahlerzeugung im Lichtbogenofen" von Manfred Jellinghaus, Verlag: Stahl Eisen N 23232/11/94, dritte Auflage, Seiten 99 bis 102.

Elektrolichtbogenöfen zur ununterbrochenen Produktion von Eisen durch kontinuierliches Schmelzen von Schrott, wobei der Ofen während des Abstechens aufrecht und fest steht und deshalb nicht gekippt werden muss, sind offenbart in der deutschen Offenlegungsschrift DE 1 937 839 und der US-Schrift US 2002/0071473 A1.

Ein Elektrolichtbogenofen, welcher als Gleichstrom- oder Wechselstrom-Lichtbogenofen betrieben werden kann ist aus der Europäischen Druckschrift EP 1 779 705 B1 bekannt. Der dort offenbarte Lichtbogenofen umfasst eine Regelungseinrichtung zum Nachsetzen der Elektroden während des Schmelzvorganges, um zum Beispiel das Abreißen der Lichtbögen aufgrund einer Verkürzung der Elektroden durch Verschleiß bzw. Abbrannt durch geeignetes Nachstellen zu verhindern.

Die Druckschrift US 3,937,867 offenbart zwar eine Kombination aus einer Nachsetzeinrichtung und einer Aufnippeleinrichtung. Allerdings ist diese Vorrichtung lediglich vorgesehen zum Aufnippeln der Elektroden bei unterbrochenem Schmelzbetrieb, d. h. bei abgeschalteter Versorgungsspannung. Dies ist implizit dadurch offenbart, dass gemäß dieser US-Schrift die Elektrode, wenn sie weitgehend abgebrannt ist, auf der Schmelze oder auf dem Boden des Ofens aufgesetzt wird und dass dann der elektrische Ansohluss für die Elektrode In Form einer Elektrodenklammer von der Elektrode gelöst wird.

Eine ähnliche Offenbarung findet sich auch in der US-Schrift US 3,898,364, wo offenbart ist, dass die Elektrode in einem Lichtbogenofen während des normalen Betriebs des Ofens grundsätzlich von einer elektrischen Kontaktklemme, welche auch zum Anlegen der elektrischen Spannung an die Elektrode dient, gehalten wird. Um die Abnutzung bzw. den Verbrauch der Elektrode während des Betriebs zu kompensieren, wird die Elektrode von Zeit zu Zeit in den Ofen nachgesetzt. Zu diesem Zweck wird die Elektrode zwischenzeitlich von einer anderen Klemme gehalten, und selber jedoch von der Klemme gelöst, so dass die Elektrode innerhalb der elektrischen Kontaktklemme weiter nach unten gleiten kann. Mit dem Öffnen der elektrischen Kontaktklemme wird auch die Zufuhr elektrischer Energie und damit ein eventueller Lichtbogen im Ofen zeitweise unterbrochen.

Weiterer Stand der Technik zum Gegenstand der vorliegenden Erfindung findet sich in den Schriften JP 5 234 674 A, CA 1 146 204 A1. EP 0 559 390 A2 sowie in der deutschen Offenlegungsschrift DE 30 16 350 A1.

Ein Lichtbogenofen zur Stahlerzeugung für einen quasi Dauerbetrieb über sechs bis sieben Tage hinweg ist aus der Europäischen Patentschrift EP 0 190 313 B1 bekannt. Der dort offenbarte Elektrolichtbogenofen umfasst ein Untergefäß zum Erzeugen einer

Schmelze durch Einschmelzen von Schmelzgut. Zum Abstechen der Schmelze umfasst das Untergefäß eine Absticheinrichtung. Der Elektrolichtbogenofen umfasst weiterhin einen Deckel zum Aussetzen auf das Untergefäß und mindestens eine Elektrode, welche von einer Elektrodenhalteeinrichtung durch eine erste Öffnung in dem Deckel in das Innere des Elektrolichtbogenofens hinein gehalten wird, Die Elektrode wird mit einer elektrischen Versorgungsspannung versorgt, welche von einer Spannungsversorgungseinrichtung bereitgestellt wird. Für den mahrtätigen Dauerbetrieb sieht die Lehre der EP 0 190 313 B1 vor, dass die elektrische Versorgungsspannung für die Elektroden dauerhaft eingeschaltet ist und bleibt, insbesondere auch während des Chargieren des Ofens mit Eisenträgern oder Zuschlagstoffen, während des Veredeins der Schmelze durch Zugabe von Legierungsstoffen sowie während der zeitweise stattfindenden Abstiche während des Dauerbetriebs und natürlich während des eigentlichen Schmelzvorganges. Als Eisenträger werden In den Ofen eingegeben Schrott oder Dlrect Reduced Iron DRI, vorzugsweise vorgewärmt. Die Abstiche finden regelmäßig während des Dauerbetriebs des Lichtbogenofens statt. Es ist vorgesehen, dass bei jedem Abstich eine Sumpfhöhe von 40% bis 50% der maximalen Badspiegelhöhe in dem Untergefäß als Restsumpfhöhe verbleibt. Für den Abstich wird die Temperatur der Schmelze auf eine gewünschte Abstichtemperatur angehoben. Der Deckel des Elektrolichtbogenofens ist wassergekühlt. Der quasi Dauerbetrieb des Elektrollchtbogenofens wird lediglich zu Wartungszwecken abgebrochen. Der Ofen wird dann herunter gefahren und sämtliche reparaturbedürftigen Komponenten werden dann ausgetauscht oder repariert.

Ausgehend von diesem Stand der Technik liegt der Erfindung die Aufgabe zugrunde, einen bekannten Elektrolichtbogenofen für einen quasi Dauerbetrieb und ein bekanntes Verfahren zu dessen Betrieb dahingehend weiterzubilden, dass sie kostengünstiger realisiert werden können, dass die Schmelze beim Abstechen nicht unnötig bewegt wird und dass Eisenträger und Zuschlagstoffe ohne Weiteres zugeführt werden können.

Diese Aufgabe wird durch den Gegenstand gemäß Patentanspruch 1 gelöst. Dieser ist dadurch gekennzeichnet, dass die Elektrodenhalteeinrichtung eine Elektrodennachsetzeinrichtung zum Nachsetzen der Elektrode entsprechend ihrem Verschleiß und eine Elektrodenaufnippeleinrichtung aufweist zum Aufnippeln der Elektrode, wobei die Absticheinrichtung derart an dem Untergefäß angeordnet ist, dass regelmäßige Abstiche bei aufrecht und fest stehendem Untergefäß möglich sind.

Der Begriff "quasi Dauerbetrieb" bedeutet, dass die Versorgungsspannung für die mindestens eine Elektrode zeitlich kontinuierlich, dass heißt dauerhaft, eingeschaltet Ist für eine große Anzahl aufeinander folgender Schmelzen, lediglich unterbrochen für Wartungsarbeiten an dem Elektrolichtbogenofen.

Der Begriff "Schmelze" wird in der vorliegenden Beschreibung in doppelter Bedeutung verwendet. Zum einen bedeutet der Begriff "Schmelze" die eingeschmolzenen Eisenträger. Zum anderen bedeutet derselbe Begriff einen während des Dauerbetriebes des Elektrolichtbogenofens periodisch wiederkehrenden Abstechzyklus. In letzterer Bedeutung bezeichnet der Begriff "Schmelze" die Zeitdauer zwischen zwei aufeinander folgenden Abstichen.

Der Begriff "Aufnippeln der Elektrode" bedeutet ein Verlängern der vorhandenen Elektrode in der Elektrodenhalteeinrichtung durch Anschrauben eines neuen Elektrodenstrangs an das Ende der aktuell in die Elektrodenhalteeinrichtung eingespannten Elektrode, welches aus dem Innern des Elektrolichtbogenofens hinaus ragt.

Der erfindungsgemäße Elektrolichtbogenofen dient zur Erzeugung einer Stahlschmelze durch Aufschmelzen von Eisenträgern, insbesondere von DRI, HBI und/oder von flüssigem und/oder festem Roheisen und/oder von Schrott.

Das beanspruchte Untergefäß ist während des Betriebs des Elektrollchtbogenofens und insbesondere während der Durchführung von Abstichen aufrecht feststehend ausgebildet. Dies hat zum einen den Vorteil, dass eine ansonsten erforderliche teure Kippmechanik hier entbehrlich ist. Beim Abschlacken gemäß der Erfindung bleibt der Elektrolichtbogenofen vorzugsweise geschlossen, dass heißt der Deckel kann auf dem Untergefäß verbleiben. Dies hat den Vorteil, dass der Schmelzvorgang im Innern des Elektrolichtbogenofens nicht zum Beispiel durch angesaugte Umgebungsluft gestört werden würde, wie dies bei angehobenem Deckel der Fall wäre. Die Umgebungsluft könnte deswegen bei angehobenem Deckel angesaugt werden, weil das Innere des Elektrolichtbogenofens aufgrund einer üblicherweise vorhandenen Absaugeinrichtung für Rauchgase unter leichtem Unterdruck steht. Das geschlossene Gefäß und damit der in seinem Inneren vorhandene Unterdruck haben weiterhin den Vorteil, dass die erforderliche Absaugleistung für die Rauchgase geringer ist als bei angehobenem Deckel, weil keine Umgebungsluft mit angesaugt werden muss. Auch wird die Schmelze im Innern des Elektrolichtbogenofens nicht unnötig in Bewegung versetzt, wie dies bei einem
Kippen des Elektrolichtbogenofens erfolgen würde. Als weiterer Vorteil ist zu nennen, dass - bei feststehend aufrechtem Gefäß - das Chargieren von Eisenträgern oder Zuschlagstoffen während des Abstechens weiterhin durchgeführt werden kann, was bei Gefäßen, welche zum Abstechen gekippt werden müssen, nicht ohne Weiteres möglich wäre.

Gemäß verschiedener Ausführungsbeispiele erfolgt nicht nur das Nachsetzen und Aufnippeln der Elektroden und das Abstechen der Schmelze, sondern auch das Chargieren von Eisenträgern und/oder Zuschlagstoffen in den Lichtbogenofen sowie das Einbringen von Spülstoffen oder chemischen Energieträgern durch eine Einblaseinrichtung in das Innere des Lichtbogenofens, und/oder von Spülstoffen durch den Boden des Untergefäßes (nicht dargestellt), gemäß der vorliegenden Erfindung bei Dauerbetrieb, d. h. bei eingeschalteter und an die Elektroden angelegter Versorgungsspannung. Die Durchführung der genannten Verfahrensschritte bei angelegter Versorgungsspannung hat den Vorteil, dass der Betrieb des Elektrolichtbogens zur Durchführung der genannten Schritte nicht unterbrochen werden muss; dass heißt, dass dessen Dauerbetrieb somit möglich ist.

Die oben genannte Aufgabe wird weiterhin durch ein Verfahren zum Betreiben eines Elektrolichtbogenofens gelöst. Die Lösung und die Vorteile der Lösung entsprechen den oben mit Bezug auf den beanspruchten Elektrolichtbogenofen genannten Vorteilen.

Das Vorsehen der beanspruchten Sumpfpegelhöhe nach dem Durchführen eines Abstichs hat den Vorteil, dass dadurch die Lebensdauer des Feuerfestmaterials des Untergefäßes verlängert wird, weil allzu große Temperaturschwankungen in diesem Bereich durch das Vorsehen der Sumpfpegelhöhe vermieden werden.

Weitere vorteilhafte Ausgestaltungen des beanspruchten Elektrolichtbogenofens sowie des beanspruchten Verfahrens zu dessen Betrieb sind Gegenstand der abhängigen Ansprüche.

Der Beschreibung sind zwei Figuren beigefügt, wobei
- Figur 1: den erfindungsgemäßen Elektrolichtbogenofen im Querschnitt; und
- Figur 2: das erfindungsgemäße Verfahren zum Betrieb des Elektrolichtbogenofens
veranschaulicht.

Die Erfindung wird nachfolgend unter Bezugnahme auf die genannten Figuren in Form von Ausführungsbeispielen detailliert beschrieben.

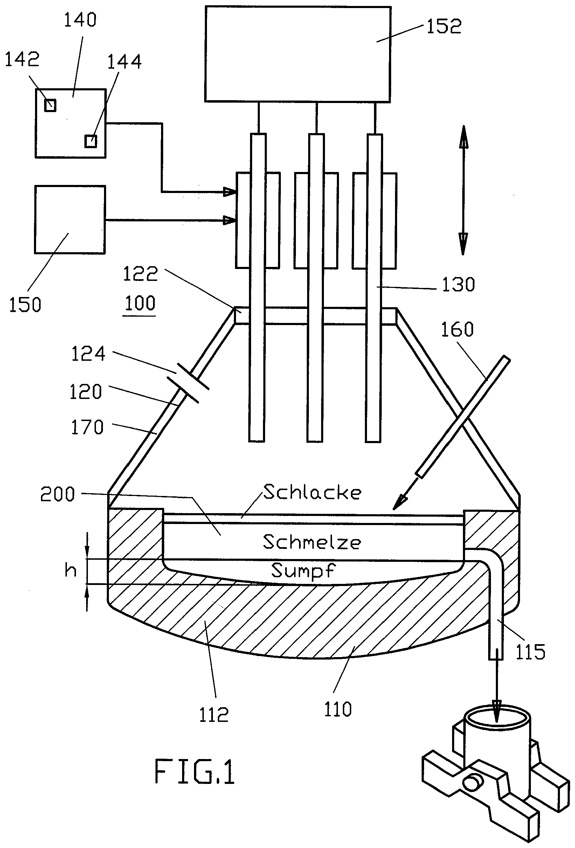

Figur 1 zeigt den erfindungsgemäßen Lichtbogenofen 100 mit einem Untergefäß 110 und einem auf das Untergefäß aufsetzbaren Deckel 120. Der Deckel ist beispielsweise konisch ausgebildet und weist eine Kühleinrichtung 170 auf zum Kühlen seiner Mantelflächen. Die Kühleinrichtung besteht zum Beispiel aus Rohrleitungen, in denen Kühlwasser geführt wird. Der Deckel weist in seinem Zentrum bzw. seiner Spitze mindestens eine erste große Öffnung auf, zum Aufnehmen der in den Elektrolichtbogenofen 100 einzuführenden Elektroden 130.

Neben der ersten Öffnung 122 weist der Deckel 120 mindestens eine zweite Öffnung 124 auf zum Chargieren von Eisenträgern und/oder Zuschlagstoffen in den Elektrolichtbogenofen bei eingeschalteter Versorgungsspannung. Als Eisenträger können in den Ofen eingegeben werden, zum Beispiel Schrott, Direct Reduced Iron DRI, Hot Briquetted Iron HBI und/oder flüssiges und/oder festes Roheisen. In der Mantelfläche des Deckels ist weiterhin eine Einblaseinrichtung 160 vorgesehen zum Einbringen von zum Beispiel Spülstoffen oder Sauerstoff oder Kohle in das Innere des Elektrolichtbogenofens, vorzugsweise bei eingeschalteter Versorgungsspannung. Wie in Figur 1 zu erkennen ist, ermöglicht die Einblaseinrichtung ein gezieltes Einbringen der Stoffe in unmittelbarer Nähe der Schlacke bzw. der Schmelze.

Während des Betriebs des Elektrolichtbogenofens steht das Untergefäß 110 aufrecht und fest. Der Deckel 120 muss deshalb nur in vertikaler Richtung, dass heißt in Richtung des Doppelpfeils in Figur 1, angehoben oder gesenkt werden können. Eine Vorrichtung zum Schwenken des Deckels kann zwar vorgesehen sein, erscheint aber nicht zwingend erforderlich. Zum Beispiel zu Wartungszwecken kann das Untergefäß verfahrbar sein.

Das Untergefäß 110 ist mit Feuerfestmaterial 112 ausgemauert. Das Feuerfestmaterial ist nach einer Wartung in einer solchen Dicke in dem Untergefäß vorhanden, dass es auch nach einem mehrtätigen Dauerbetrieb des Elektrolichtbogenofens noch eine ausreichende Restdicke aufweist. Das Untergefäß weist eine Absticheinrichtung 115 auf zum Abstechen der Schmelze vorzugsweise so, dass nach jedem Abstich eine Sumpfpegelhöhe h von mindestens 500 mm in dem feststehenden Untergefäß verbleibt.

Zum Halten der Elektroden 130 in dem Elektrolichtbogenofen 100 ist eine Elektrodenhalteeinrichtung 140 vorgesehen. Sie umfasst eine Elektrodennachsetzeinrichtung 142 zum Nachsetzen der Elektroden 130 entsprechend ihrem Verschleiß und einer Elektrodenaufnippeleinrichtung zum Aufnippeln der Elektrode 130. Sowohl die Elektrodenachsetzeinrichtung 142 wie auch die Elektrodenaufnippeleinrichtung 144 sind erfindungsgemäß so ausgebildet, dass sie ein Nachsetzen und Aufnippeln der Elektroden während des Betriebs des Elektrolichtbogenofens, bei eingeschalteter Versorgungsspannung an der Elektrode 130 ermöglichen. Insbesondere dadurch wird ein Dauerbetrieb des Elektrolichtbogenofens über mehrere Abstichzyklen bzw. Schmelzen hinweg überhaupt erst möglich.

Zum Eintragen elektrischer Energie in den Elektrolichtbogenofen ist eine Spannungsversorgungseinrichtung 150 vorgesehen, zum Bereitstellen einer elektrischen Versorgungsspannung für die mindestens eine Elektrode. Die Spannungsversorgungseinrichtung kann als Gleichstromquelle zum Bereitstellen der Versorgungsspannung in Form einer Gleichspannung oder in Form einer Wechselspannungsquelle zum Bereitstellen der Versorgungsspannung in Form einer Wechselspannung für die Elektrode 130 ausgebildet sein. Sie umfasst eine Transformatoreinrichtung 152, welche erfindungsgemäß oberhalb des Ofendeckels angeordnet ist. In dem Fall, dass die Spannungsversorgungseinrichtung als Wechselspannungsquelle ausgebildet ist und der Elektrolichtbogenofen als alternating current AC-Ofen betrieben wird, umfasst die Transformatoreinrichtung 152 drei Einphasentrafos, welche zueinander in einem Winkel 120° versetzt symmetrisch angeordnet sind.

Nachfolgend wird das Verfahren, wie der Elektrolichtbogenofen erfindungsgemäß betrieben wird, näher beschrieben.

Das Hauptcharakteristikum des erfindungsgemäßen Verfahrens besteht darin, dass der Elektrolichtbogenofen in einem "quasi Dauerbetrieb" über mehrere Tage und eine Vielzahl von Schmelzen bzw. Abstichzyklen hinweg ohne Unterbrechung betrieben wird. Er wird lediglich zu Wartungszwecken nach mehreren Tagen Dauerbetrieb abgeschaltet und dann entsprechend gewartet.

Der Dauerbetrieb wird ermöglicht zum einen durch die Elektrodennachsetzeinrichtung, welche während des Betriebs des Elektrolichtbogenofens die Elektrode 130 derart in das Innere des Ofens nachführt, dass idealerweise trotz des stattfindenden Verschleißes bzw. Abbrandes der Elektroden die Lichtbogenlänge im Wesentlichen konstant bleibt. Um den Betrieb des Elektrolichtbogenofens auch bei Erreichen einer Minimallänge der Elektrode 130 nicht unterbrechen zu müssen, sieht die vorliegende Erfindung vor, dass neben der Elektrodennachsetzeinrichtung 142 auch eine Elektrodenaufnippeleinrichtung 144 vorgesehen ist, welche sicherstellt, dass die Elektrode 130 vor Erreichen ihrer Minimallänge nach oben hin wieder verlängert wird. Dieses sogenannte Aufnippeln erfolgt typischerweise durch Anschrauben einer Verlängerungselektrode bzw. eines neuen Elektrodenstrangs an das ofenferne Ende der Elektrode. Erfindungsgemäß ermöglicht die Elektrodenaufnippeleinrichtung 144 dieses Aufnippeln der Elektrode bei eingeschalteter Versorgungsspannung, so dass der Betrieb des Elektrolichtbogenofens während des Aufnippelns fortgesetzt werden kann.

Jedoch nicht nur das Nachsetzen und Aufnippeln der Elektrode 130, sondern auch das Chargieren von Eisenträgern oder Zuschlagstoffen oder das Einblasen von Spülstoffen in den Elektrolichtbogenofen, das Veredeln der Schmelze durch Zugabe von Legierungsstoffen sowie insbesondere auch das Abstechen der Schmelze oder der Schlacke erfolgen vorteilhafterweise erfindungsgemäß bei eingeschalteter Versorgungsspannung zu beliebigen Zeiten während des Dauerbetriebs. Dies hat den Vorteil, dass auch für diese genannten Vorgänge der Betrieb des Elektrolichtbogenofens nicht unterbrochen werden muss, was insbesondere eine deutliche Kosteneinsparung gegenüber einem unterbrochenen Betrieb des Elektrolichtbogenofens zur Folge hat. Die Kostenersparrniss ergibt sich insbesondere deshalb, weil die bei diskontinuierlichem Betrieb des Elektrolichtbogenofens anfallenden Aus-Zeiten für die Produktion bei dem erfindungsgemäßem Dauerbetrieb wegfallen. Die installierte elektrische Leistung kann mit der vorliegenden Erfindung optimal genutzt werden. Es müssen insbesondere keine Speicher für elektrische Energie und keine anderen elektrischen Verbraucher bereitgestellt werden, um die von der Spannungsversorgungseinrichtung bereitgestellte elektrische Leistung während der bei diskontinuierlichem Betrieb üblichen Aus-Zeiten des Elektrolichtbogenofens zu verbrauchen. Auch die Energieverluste in der Einspeisung reduzieren sich aufgrund der deutlich in ihrer Anzahl reduzierten Ein- und Ausschaltvorgänge.

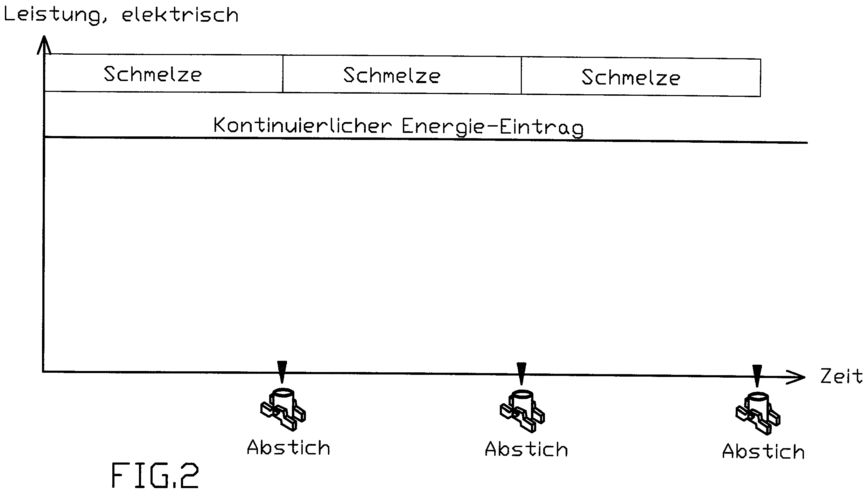

Der zeitlich kontinuierliche Energieeintrag, dass heißt die kontinuierlich eingeschaltete Versorgungsspannung für die Elektrode 130 über mehrere Abstichzyklen bzw. Schmelzen hinweg ist in Figur 2 idealisiert grafisch veranschaulicht.

Der Elektrolichtbogenofen wird gemäß der vorliegenden Betriebsweise mit durchschnittlich ca. 1600°C im Dauerbetrieb betrieben. Lediglich zu Beginn eines geplanten Abstechvorganges, der bei angelegter Versorgungsspannung und bei aufrecht feststehendem Untergefäß erfolgt, wird die Temperatur der Schmelze vorteilhafterweise leicht um ca. 50° angehoben, um einem vorzeitigen unerwünschten Abkühlen der Schmelze nach ihrem Austritt aus dem Elektrolichtbogenofen vorzubeugen. Das Abstechen erfolgt vorzugsweise so, das nach dem Abstechen immer noch eine Sumpfpegelhöhe h von mindestens 500 mm gegenüber der tiefsten Stelle im Untergefäß verbleibt. Dies hat den Vorteil, dass insbesondere das Untergefäß nicht durch einen Leerbetrieb ohne Schmelze bei angelegter Versorgungsspannung und dann entstehendem Lichtbogenofen zerstört wird. Aufgrund des vorhandenen Sumpfes halten sich Schwankungen der Temperatur der Schmelze und damit des Untergefäßes in Grenzen. Auf diese Weise wird die Belastung des Feuerfestmaterials reduziert und damit die Lebensdauer des Untergefäßes verlängert.

Nicht nur das Abstechen, sondern auch das Nachsetzen und/oder Aufnippeln der Elektroden können während des Chargierens bei angelegter Versorgungsspannung erfolgen.

## Patentansprüche

1. Elektrolichtbogenofen (100) für einen quasi Dauerbetrieb mit:
einem Untergefäß (110) zum Schmelzen von Eisenträgern; wobei das Untergefäß eine Absticheinrichtung (115) zum regelmäßigen Abstechen von Schmelze aufweist;
einem Deckel (120) zum Aufsetzen auf das Untergefäß;
mindestens einer Elektrode (130);
einer Elektrodenhalteeinrichtung (140) zum Halten der mindestens einen Elektrode (130) durch eine erste Öffnung (122) in dem Deckel (120) in das Innere des Elektrolichtbogenofens; und
eine Spannungsversorgungseinrichtung (150) zum Bereitstellen einer elektrischen Versorgungsspannung für die Elektrode (130);
**dadurch gekennzeichnet, dass**
die Elektrodenhalteeinrichtung (140) eine Elektrodennachsetzeinrichtung (142) zum Nachsetzen der Elektrode entsprechend ihrem Verschleiß und eine Elektrodenaufnippeleinrichtung (144) aufweist zum Aufnippeln der Elektrode (130); und
die Absticheinrichtung (115) derart an dem Untergefäß (110) angeordnet ist, dass regelmäßige Abstiche bei aufrecht und fest stehendem Untergefäß möglich sind.

2. Elektrolichtbogenofen (100) nach Anspruch 1, **dadurch gekennzeichnet, dass** der Deckel (120) mindestens eine zweite Öffnung (124) aufweist zum Chargieren von Eisenträgern und/oder Zuschlagstoffen in den Elektrolichtbogenofen.

3. Elektrolichtbogenofen (100) nach einem der vorangegangenen Ansprüche, **dadurch gekennzeichnet, dass**
der Deckel eine Einblaseinrichtung (160) aufweist zum Einbringen von Spülstoffen in das Innere des Elektrolichtbogenofens.

4. Elektrolichtbogenofen (100) nach einem der vorangegangenen Ansprüche, **dadurch gekennzeichnet, dass**
der Deckel (120) konisch ausgebildet ist.

5. Elektrolichtbogenofen (100) nach einem der vorangegangenen Ansprüche, **dadurch gekennzeichnet, dass**
der Deckel (120) eine Kühleinrichtung (170) aufweist zum Kühlen des Deckels.

6. Elektrolichtbogenofen (100) nach einem der vorangegangenen Ansprüche, **dadurch gekennzeichnet, dass**
der Deckel (120) in Bezug auf das während des Betriebs des Elektrolichtbogenofens feststehende Untergefäß (110) vertikal verfahrbar ist.

7. Elektrolichtbogenofen (160) nach einem der vorangegangenen Ansprüche, **dadurch gekennzeichnet, dass**
die Spannungsversorgungseinrichtung (150) als Gleichspannungsquelle oder Wechselspannungsquelle ausgebildet ist zum Bereitstellen der Versorgungs-Spannung für die Elektrode in Form einer Gleichspannung oder einer Wechselspannung.

8. Elektrolichtbogenofen (100) nach einem der vorangegangenen Ansprüche, **dadurch gekennzeichnet, dass**
die Spannungsversorgungseinrichtung (150) eine Transformatoreinrichtung (152) aufweist, welche oberhalb des Deckels (120) angeordnet ist.

9. Elektrolichtbogenofen (100) nach Anspruch 7 und 8, **dadurch gekennzeichnet, dass**
bei Ausbildung der Spannungsversorgungseinrichtung als Wechselspannungsquelle die Transformatoreinrichtung (152) drei Einphasentransformatoren aufweist, welche in Bezug zu einander jeweils um 120° versetzt symmetrisch angeordnet sind.

10. Elektrolichtbogenofen (100) nach einem der vorangegangenen Ansprüche, **dadurch gekennzeichnet, dass**
das Untergefäß (110) in seinem Innern mit Feuerfestmaterial (112) ausgemauert ist.

11. Verfahren zum Betreiben eines Elektrolichtbogenofens (100) in einem quais Dauerbetrieb mit einem Untergefäß (110), einem auf das Untergefäß aufsetzbaren Deckel (120) und mindestens einer Elektrode (130), welche durch eine erste Öffnung (122) in dem Deckel (120) in das Innere des Elektrolichtbogenofens hineinfahrbar ist, umfassend folgende Schritte:
- Chargieren von Eisenträgern oder Zuschlagstoffen In den Elektrolichtbogenofen durch mindestens eine zweite Öffnung (124) in dem Deckel;
- zeitkontinuierliches Anlegen einer elektrischen Versorgungsspannung an die Elektrode (130) zum Schmelzen der in den Elektrolichtbogenofen eingebrachten Eisenträger für den Dauerbetrieb des Elektrolichtbogenofens über mehrere Schmelzen hinweg;
**dadurch gekennzeichnet, dass**
- die mindestens eine Elektrode nachgesetzt und aufgenippelt wird; und
ein Abstechen der Schmelze (200) bei aufrecht und feststehendem Untergefäß (110) erfolgt.

12. Verfahren nach Anspruch 11
**dadurch gekennzeichnet, dass**
das Chargieren des Elektrolichtbogenofens (100) mit den Eisenträgern oder mit Zuschlagstoffen und das Einblasen von Spülstoffen in den Elektrollchtbogenofen erfolgen.

13. Verfahren nach Anspruch 11 oder 12,
**dadurch gekennzeichnet, dass**
der Elektrolichtbogenofen (100) mit einer Temperatur von durchschnittlich ca. 1600°C im Dauerbetrieb betrieben wird.

14. Verfahren nach Anspruch 11,
**dadurch gekennzeichnet, dass**
das Abstechen so erfolgt, dass nach dem Abstechen eine Sumpfpegelhöhe (h) von mindestens 500 mm in dem Untergefäß verbleibt.

15. Verfahren nach einem der Ansprüche 11 oder 14,
**dadurch gekennzeichnet, dass**
der Elektrolichtbogenofen (100) zum Abstechen der Schmelze kurzzeitig mit ca. 1650°C betrieben wird.

16. Verfahren nach einem der Ansprüche 11 bis 15,
**dadurch gekennzeichnet,**
**dass** Nachsetzen und/oder Aufnippeln der Elektroden auch während des Chargierens erfolgen kann.

## Claims

1. Electric arc furnace (100) for quasi continuous operation, comprising:
a lower vessel (110) for melting iron carriers, wherein the lower vessel has a tap device (115) for regular tapping of melts;
a cover (120) for placing on the lower vessel;
at least one electrode (130);
an electrode holding device (140) for holding the at least one electrode (130) in the interior of the electric arc furnace via a first opening (122) in the cover (120); and
a voltage supply device (150) for providing an electrical supply voltage for the electrode (130);
**characterised in that**
the electrode holding device (140) comprises an electrode adjusting device (142) for adjusting the electrode in correspondence with the wear thereof and an electrode nippling device (144) for nippling the electrode (130); and
the tapping device (115) is so arranged at the lower vessel (110) that regular tapping can be carried out with the lower vessel upright and stationary.

2. Electric arc furnace (100) according to claim 1, **characterised in that** the cover (120) has at least one second opening (124) for charging iron carriers and/or additives into the electric arc furnace.

3. Electric arc furnace (100) according to one of the preceding claims, **characterised in that** the cover has a blowing-in device (160) for introduction of flushing agents into the interior of the electric arc furnace.

4. Electric arc furnace (100) according to any one of the preceding claims, **characterised in that** the cover (120) is of conical construction.

5. Electric arc furnace (100) according to any one of the preceding claims, **characterised in that** the cover (120) has a cooling device (170) for cooling the cover.

6. Electric arc furnace (100) according to any one of the preceding claims, **characterised in that** the cover (120) is vertically movable with respect to the lower vessel (110), which is stationary during operation of the electric arc furnace.

7. Electric arc furnace (100) according to any one of the preceding claims, **characterised in that** the voltage supply device (150) is constructed as a direct voltage source or an alternating voltage source for providing the supply voltage for the electrode in the form of a direct voltage or an alternating voltage.

8. Electric arc furnace (100) according to any one of the preceding claims, **characterised in that** the voltage supply device (150) comprises a transformer device (152) arranged above the cover (120).

9. Electric arc furnace 9100) according to claim 7 and 8, **characterised in that** if the voltage supply device is constructed as an alternating voltage source the transformer device (152) has three single-phase transformers which are arranged symmetrically to be offset with respect to one another in each instance by 120°.

10. Electric arc furnace (100) according to any one of the preceding claims, **characterised in that** the lower vessel (110) is lined in its interior with refractory material (112).

11. Method for operation of an electric arc furnace (100) in quasi continuous operation with a lower vessel (110), a cover (120) placeable on the lower vessel and at least one electrode (130) which is movable into the interior of the electric arc furnace via a first opening (122) in the cover (120), comprising the following steps:
- charging iron carriers or additives into the electric arc furnace through at least one second opening (124) in the cover; and
- application of an electrical supply voltage continuously in time to the electrode (130) for melting the iron carriers, which are introduced into the electric arc furnace, for continuous operation of the electric arc furnace over several melting processes;
**characterised in that**
- the at least one electrode is adjusted and nippled; and
- tapping of the melt (200) is carried out with the lower vessel (110) upright and stationary.

12. Method according to claim 11, **characterised in that** charging of the electric arc furnace (100) with the iron carriers or with additives and blowing of flushing agents into the electric arc furnace are carried out.

13. Method according to claim 11 or 12, **characterised in that** the electric arc furnace (100) is operated in continuous operation at a temperature on average of approximately 1600° C.

14. Method according to claim 11, **characterised in that** tapping is carried out so that after the tapping a sump level height (h) of at least 500 millimetres remains in the lower vessel.

15. Method according to one of claims 11 and 14, **characterised in that** the electric arc furnace (100) is operated temporarily at approximately 1650° C for tapping the melt.

16. Method according to any one of claims 11 to 15, **characterised in that** adjusting and/or nippling of the electrodes can also be carried out during the charging.

## Revendications

1. Four à arc électrique (100) pour un usage quasi permanent, comprenant :
une cuve inférieure (110) pour fondre de la ferraille, cette cuve inférieure étant équipée d'un dispositif de coulée (115) pour l'écoulement régulier de métal en fusion ;
une voûte (120) venant se placer sur la cuve inférieure ;
au moins une électrode (130) ;
un dispositif de maintien d'électrode (140) pour maintenir dans l'intérieur du four à arc électrique l'au moins une électrode (130), par une première ouverture (122) ménagée dans la voûte (120) ; et
une installation d'alimentation électrique (150) qui fournit une tension d'alimentation électrique à l'électrode (130) ;
**caractérisé en ce que**
le dispositif de maintien d'électrode (140) présente un dispositif de repositionnement d'électrode (142) pour repositionner l'électrode en fonction de son usure et un dispositif de raccordement d'électrode (144) pour raccorder une nouvelle électrode (130) ; et
le dispositif de coulée (115) est positionné de telle manière sur la cuve inférieure (110) que des écoulements réguliers sont possibles lorsque la cuve inférieure est dressée et fixe.

2. Four à arc électrique (100) selon la revendication 1, **caractérisé en ce que** la voûte (120) présente au moins une seconde ouverture (124) pour charger la ferraille et/ou des additifs dans le four à arc électrique.

3. Four à arc électrique (100) selon l'une quelconque des revendications précédentes, **caractérisé en ce que** la voûte présente un dispositif d'injection (160) pour l'introduction d'agents de décrassage à l'intérieur du four à arc électrique.

4. Four à arc électrique (100) selon l'une quelconque des revendications précédentes, **caractérisé en ce que** la voûte (120) est de forme conique.

5. Four à arc électrique (100) selon l'une quelconque des revendications précédentes, **caractérisé en ce que** la voûte (120) présente un système de refroidissement (170), pour le refroidissement de celle-ci.

6. Four à arc électrique (100) selon l'une quelconque des revendications précédentes, **caractérisé en ce que** la voûte (120) est déplaçable verticalement par rapport à la cuve inférieure (110) fixe lorsque le four à arc fonctionne.

7. Four à arc électrique (100) selon l'une quelconque des revendications précédentes, **caractérisé en ce que** l'installation d'alimentation électrique (150) est une source de courant continu ou une source de courant alternatif, pour l'alimentation de l'électrode en tension d'alimentation à courant continu ou à courant alternatif.

8. Four à arc électrique (100) selon l'une quelconque des revendications précédentes, **caractérisé en ce que** l'installation d'alimentation électrique (150) comporte un dispositif transformateur (152) disposé au-dessus de la voûte (120).

9. Four à arc électrique (100) selon les revendications 7 et 8, **caractérisé en ce que**, lorsque l'installation d'alimentation électrique est une source de courant alternatif, le dispositif transformateur (152) comporte trois transformateurs monophasés placés de façon symétrique les uns par rapports aux autres, selon un angle de 120°.

10. Four à arc électrique (100) selon l'une quelconque des revendications précédentes, **caractérisé en ce que** l'intérieur de la cuve inférieure (110) est maçonné de matériau réfractaire (112).

11. Procédé d'exploitation d'un four à arc électrique (100) pour un usage quasi permanent, composé d'une cuve inférieure (110), d'une voûte (120) venant se placer sur la cuve inférieure et d'au moins une électrode (130) qui peut être introduite dans l'intérieur du four à arc électrique par une première ouverture (122) ménagée dans la voûte (120) ; et comportant les étapes suivantes :
- chargement de ferraille ou d'additifs dans le four à arc électrique par au moins une seconde ouverture (124) ménagée dans la voûte ;
- application en continu d'une tension d'alimentation électrique à l'électrode (130) pour fondre la ferraille qui se trouve dans le four à arc électrique, celui-ci fonctionnant en continu durant plusieurs fusions ;
**caractérisé en ce que**
- au moins une électrode est repositionnée et raccordée, et l'écoulement du métal en fusion (200) s'effectue lorsque la cuve inférieure (110) est dressée et fixe.

12. Procédé selon la revendication 11, **caractérisé en ce que** le chargement du four à arc électrique (100) en ferraille ou en additifs, et l'injection d'agents de décrassage s'effectuent dans le four à arc électrique.

13. Procédé selon la revendication 11 ou 12, **caractérisé en ce que** le four à arc électrique (100) fonctionne en continu à une température moyenne de 1600°C environ.

14. Procédé selon la revendication 11, **caractérisé en ce que** l'écoulement s'effectue de manière telle qu'à la fin de celui-ci, il subsiste une hauteur de niveau de puisard (h) d'au moins 500 mm dans la cuve inférieure.

15. Procédé selon la revendication 11 ou 14, **caractérisé en ce que** le four à arc électrique (100) est chauffé brièvement à 1650°C environ pour l'écoulement du métal en fusion.

16. Procédé selon l'une quelconque des revendications 11 à 15, **caractérisé en ce que** le repositionnement et/ou le raccordement des électrodes peut avoir lieu également durant le chargement.
